# EUROPÄISCHE PATENTSCHRIFT

(11) **EP 1 138 603 B1**
(45) Veröffentlichungstag und Bekanntmachung des Hinweises auf die Patenterteilung: **11.06.2003**
(21) Anmeldenummer: 01107539.7
(22) Anmeldetag: 27.03.2001
(51) Int. Cl.: B65B 51/30

(54) **Vorrichtung und Verfahren zum Verschweissen in Schlauchbeuteln**
Device and method to seal tubular bags
Dispositif et procédé de soudage pour sacs tubulaires

(30) Priorität: 29.03.2000 DE 10015628
(43) Veröffentlichungstag der Anmeldung: 04.10.2001
(73) Patentinhaber: OPTIMA filling and packaging machines GmbH, 74523 Schwäbisch Hall (DE)
(72) Erfinder: Meyer, Erich, 74523 Schwäbisch Hall (DE)
(74) Vertreter: Patentanwälte , Ruff, Wilhelm, Beier, Dauster & Partner

(56) Entgegenhaltungen:
- CH-A- 345 584
- US-A- 2 387 812
- US-A- 4 044 524
- US-A- 4 592 193
- US-A- 4 601 159
- US-A- 6 161 366

## Beschreibung

Die Erfindung geht aus von einem Verfahren und einer Vorrichtung, mittels deren Hilfe Produkte in Schlauchbeutel eingeschweißt werden. Bei den Produkten handelt es sich insbesondere um zusammengepreßte bzw. komprimierbare Produkte, beispielsweise Papierhygieneprodukte, die in zusammengepreßtem Zustand in Schlauchbeutel eingeschweißt werden sollen.

Üblicherweise wird ein Folienschlauch über Formbleche direkt von einer Flachfolie geformt. Eine Schweißeinrichtung verschweißt die zum Schlauch gefaltete Folie in Längsrichtung zusammen. Das Verpackungsgut wird mit gegenseitigem Abstand über eine Zutransporteinrichtung hintereinander in den Folienschlauch eingeschoben.

Dokument US 4 592 193 offenbart ein Verfahren und eine Vorrichtung gemäß dem Oberbegriff der Ansprüche 1 und 10.

Bei einer bekannten Vorrichtung werden Halteplatten beidseits der Schweißstelle angeordnet, deren Abstand nach dem Einpressen verringert wird (EP 945349).

Beim Querschweißen zwischen den Produkten besteht das Problem, dass die dort enthaltene Luft nicht oder nur schwer entweichen kann, insbesondere dann, wenn die Folie hauteng am Packgut anliegen soll. Die beim Querfalten verdrängte Luft kann unter Umständen eine bereits geschweißte Quernaht wieder öffnen.

Aus diesem Grunde werden horizontale Schlauchbeutelmaschinen zur Zeit im höheren Ausbringungsbereich ausschließlich für Füllguthöhen von kleiner als 50 mm eingesetzt. Das oben erwähnte Füllgut, das in zusammengepreßtem Zustand verpackt werden soll, konnte bisher nicht auf Schlauchbeutelmaschinen verarbeitet werden, die mit Monofolien arbeiten, beispielsweise Polyethylenfolien.

Beim Verpacken derartiger komprimierter Produkte bei einer Ausbringungsleistung von mehr als beispielsweise 60 Beutel pro Minute platzt auf den herkömmlichen horizontalen Schlauchbeutelmaschinen die noch warme Querschweißnaht auf, während die nächste Querschweißnaht gebildet wird. Die Produkte, die in Flußrichtung gesehen vor dem Schweißbacken liegen, werden durch das Eintauchen des Schweißbackens nach hinten verschoben, so dass sich gegebenenfalls die gesamte Produktreihe verschiebt. Dies kann zu einer Beschädigung durch den erneut eintauchenden Schweißbacken führen.

Beim Verpacken von nicht komprimierbaren Gegenständen, beispielsweise Bisquits, ist es bereits bekannt, den Folienschlauch im Bereich zwischen den Gegenständen nach innen zu drücken, um dadurch die Gegenstände gegen ein Verrutschen zu sichern. Beim Eindrücken können auch Löcher gestanzt werden, durch die die Luft entweichen kann. Beim Querverschweißen wird die jeweilige Öffnung dann wieder luftdicht verschweißt (CH-A-374587).

Weiterhin ist ein Verfahren zum Verpacken von Produkten unter Vakuum oder in Erdgas bekannt (US-A-4044524), bei dem um die Produkte ein Folienschlauch gebildet und vor dem Querverschweißen die Luft aus dem Folienschlauch abgesaugt oder in Erdgas in den Folienschlauch eingebracht wird.

Ein ähnliches Verfahren ist aus US-A-4601159 bekannt.

Der Erfindung liegt die Aufgabe zugrunde, ein Verfahren und eine Vorrichtung zum Verschweißen in Schlauchbeutel zu schaffen, mittels deren Hilfe die Schlauchbeutel so hergestellt werden können, dass diese eng am Verpackungsgut anliegen können, wobei eine hohe Ausbringungsleistung möglich sein soll.

Zur Lösung dieser Aufgabe schlägt die Erfindung ein Verfahren mit den Merkmalen des Anspruchs 1 sowie eine Vorrichtung mit den im Anspruch 10 genannten Merkmalen vor. Weiterbildungen der Erfindung sind Gegenstand der abhängigen Ansprüche, deren Wortlaut ebenso wie der Wortlaut der Zusammenfassung durch Bezugnahme zum Inhalt der Beschreibung gemacht wird.

Bei der Herstellung der Querfalten, bei der also die Folien einander bis zur gegenseitigen Berührung angenähert werden, kann die dabei verdrängte Luft durch die vorher hergestellte Perforation ausströmen. Sie kann so lange ausströmen, bis der Folienschlauch quer verschweißt ist.

Erfindungsgemäß kann vorgesehen sein, dass die Perforation in einem quer zur Längsrichtung des Folienschlauchs verlaufenden Streifen angebracht wird, wobei der Streifen schmal sein kann, um nicht unnötige viel Folie zu verschwenden. Die Größe der Perforation wird so ausgewählt, dass die Luft entweichen kann.

In Weiterbildung der Erfindung kann vorgesehen sein, dass die Luft während der Herstellung der Querfalten abgesaugt wird, um den Vorgang der Herstellung der Schlauchbeutel zu beschleunigen.

Erfindungsgemäß kann vorgesehen sein, dass die Perforation vor der Schlauchbildung durchgeführt wird, beispielsweise noch in flachem ungefaltetem Zustand der Folie. Die Perforation kann insbesondere durch einen Stanzvorgang hergestellt werden.

Die Querverschweißung zum Abschließen der einzelnen Schlauchbeutel kann in Weiterbildung der Erfindung beidseits des die Perforation enthaltenden Bereichs der Folie durchgeführt werden. Es gibt nach der Erfindung also zwei Querschweißnähte, die einen gewissen Abstand voneinander aufweisen.

Der die Perforationslöcher enthaltende Bereich des Folienschlauchs kann, sofern dies nicht stört, an einem der beiden Schlauchbeutel hängen bleiben. Erfindungsgemäß kann jedoch auch vorgesehen sein, dass der die Perforation enthaltende Bereich entfernt wird, beispielsweise nach dem Quertrennen, oder aber auch vor dem Quertrennen.

Die Quertrennung kann beispielsweise durch zwei parallele Schneideinrichtungen erfolgen, die beispielsweise beidseits des die Perforation enthaltenden Bereichs einen Schnitt durchführen.

Insbesondere kann vorgesehen sein, dass das Absaugen der Luft mit Hilfe von Unterdruck auch während des Trennens aufrechterhalten wird, um den Folienrest während des Schneidens festzuhalten.

Insbesondere kann vorgesehen sein, dass der Schneidvorgang vor dem Schweißen durchgeführt wird.

Die Erfindung schlägt ebenfalls eine Vorrichtung zum Verschweißen von Produkten in Schlauchbeutel vor, wie sie im Anspruch 10 beschrieben ist. Die Vorrichtung enthält eine Einrichtung, um eine Flachfolie zur Bildung eines Folienschlauchs in Längsrichtung zu falten, sowie eine Schweißnaht in Längsrichtung anzubringen. Die Vorrichtung enthält weiterhin eine Einrichtung zum Perforieren der Folien in einem quer zur Längsrichtung verlaufenden Bereich, wobei der Bereich jeweils einen solchen Abstand vom nächstfolgenden Bereich aufweist, wie dies der Produktgröße entspricht. Das Querschweißmodul enthält zwei Paare von Schweißbacken, die einen in Längsrichtung des Folienschlauchs gemessenen Abstand voneinander aufweisen. Dieser Abstand entspricht mindestens der Breite des Streifens mit der Perforation. Mit Hilfe des Schweißmoduls werden also zwei Schweißungen durchgeführt, die den perforierten Bereich zwischen sich einschließen. Die Schweißbacken können dabei auch so ausgebildet sein, dass sie eine Trennung des Folienschlauches bewirken.

In Weiterbildung der Erfindung kann vorgesehen sein, dass die Vorrichtung eine Trenneinrichtung zum Quertrennen des Folienschlauchs zwischen den eingelegten Produkten aufweist. Die Anordnung einer von den Schweißbacken getrennten Klemmeinrichtung macht es möglich, die Schweißung unter Zertrennung des Folienschlauches zeitlich und örtlich voneinander zu unterscheiden.

Insbesondere kann in Weiterbildung der Erfindung vorgesehen sein, dass die Trenneinrichtung zwei Messer aufweist, die in Längsrichtung des Folienschlauches einen Abstand voneinander aufweisen, der mindestens der Breite des Streifens mit den Perforationslöchern entspricht.

Erfindungsgemäß kann die Vorrichtung eine Absaugeinrichtung aufweisen, die im Bereich zwischen den beiden Paaren von Schweißbacken ansaugt. Hiermit kann das Absaugen der verdrängten Luft beschleunigt werden. Außerdem kann die Folie während des Schneidvorgangs festgehalten werden.

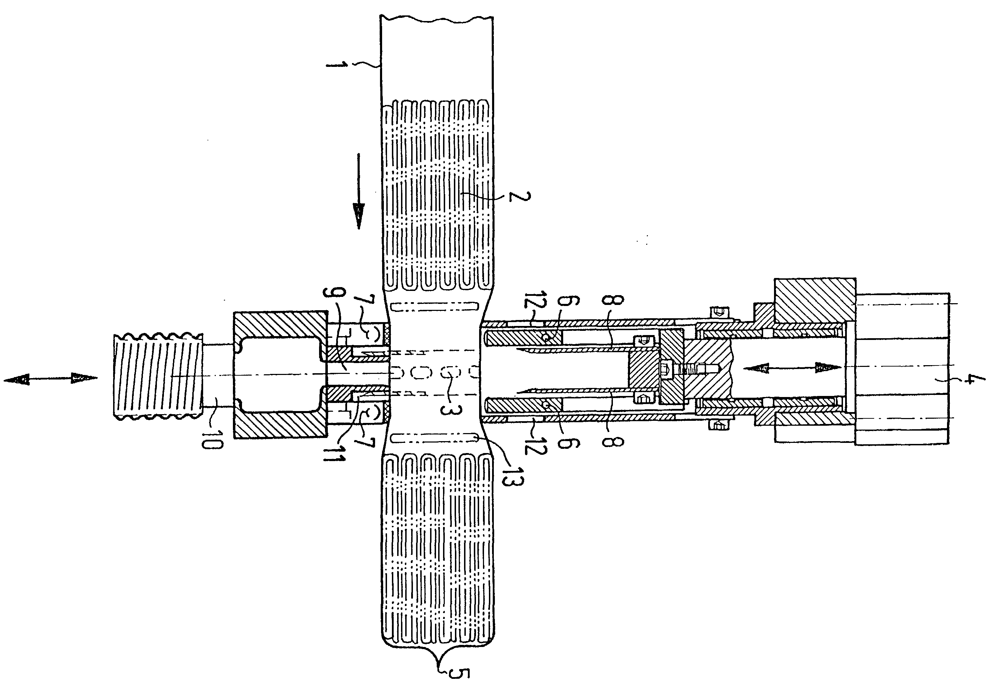

Weitere Merkmale, Einzelheiten und Vorzüge der Erfindung ergeben sich aus der folgenden Beschreibung einer bevorzugten Ausführungsform der Erfindung sowie anhand der Zeichnung.

Hierbei zeigt die einzige Zeichnungsfigur einen Schnitt durch die Stelle einer Vorrichtung, an der eine Querschweißung durch einen Folienschlauch durchgeführt wird. Der Folienschlauch 1 wird von links nach rechts transportiert. Er enthält die zu verpackenden Güter 2 bereits mit gegenseitigem Abstand. In der Folie ist eine Reihe von Perforationslöchern 3 eingestanzt worden, die in einem schmalen Bereich quer zur Längsrichtung angeordnet sind. An der dargestellten Stelle soll nun eine Trennung des noch zusammenhängenden Folienschlauches in einzelne Schlauchbeutel durchgeführt werden. Zu diesem Zweck enthält die Vorrichtung ein Querschweißmodul 4, das zwei auf beiden Seiten des Folienschlauches angeordnete Teile aufweist. Beide Teile sind aufeinanderzu bewegbar, um dadurch zu erreichen, dass die herzustellenden Naht 5 etwa in der Mitte zwischen den beiden Seiten des Schlauchbeutels angeordnet ist.

Das Schweißmodul enthält zwei Paare von Schweißbacken, jeweils bestehend aus einem oberen Impuls beheizten Schweißbacken 6 und einem unteren Impuls beheizten Schweißbacken 7. Die beiden Schweißbacken 6, 7 sind so angeordnet und ausgebildet, dass sie aufeinanderzu bewegt werden können und dabei die Folien zwischen sich einschließen können. Durch eine Beheizung eines oder beider Schweißbacken 6, 7 erfolgt dann eine Verschweißung der Folien miteinander.

Die beiden Paare von Schweißbacken 6, 7 weisen, in Längsrichtung des Schlauchbeutels gesehen, einen Abstand auf. Zwischen beiden Paaren von Schweißbacken 6, 7 ist eine Trenneinrichtung angeordnet, die zwei parallel verlaufende Trennmesser 8 enthält. Beide Trennmesser sind unmittelbar hinter den Schweißbacken angeordnet und weisen ebenfalls einen Abstand in Längsrichtung des Folienschlauches auf.

An dem in der Zeichnung unterhalb des Folienschlauches angeordneten Teil des Schweißmoduls 4 ist mittig zwischen den beiden Schweißbacken 7 eine Ansaugdüse 9 vorhanden, die mit einer Unterdruckleitung 10 in Verbindung steht.

Jeweils zwischen den unteren Schweißbacken 7 und der Ansaugdüse 9 ist eine Aussparung 11 gebildet, die in Verlängerung der beiden Schneidmesser 8 angeordnet ist.

Außerhalb der beiden Paare von Schweißbacken 6, 7 sind an dem oberen Teil des Schweißmoduls 4 zwei Klemmbacken 12 angeordnet, die etwas über die Schweißbacken 6 vorstehen.

Die Vorrichtung, wie sie dargestellt wurde, arbeitet nach dem folgenden Verfahren. Die beiden Teile des Schweißmoduls 4 werden aufeinanderzu bewegt, bis sie sich in der Mitte zwischen der oberen und der unteren Seite des Folienschlauches treffen. Die Klemmbacken 12 halten den Folienschlauch fest. Von vorne und hinten werden die Seitenfalten mit Hilfe der angedeuteten Falter 13 gebildet. Während dieses Zusammendrückens der Folien in dem Bereich zwischen den Gütern 2 entweicht die Luft durch die Perforationslöcher 3. Dies wird durch das Ansaugen mit Hilfe der Ansaugdüse 9 unterstützt. Dadurch wird es vermieden, dass eine bereits fertige Verschlussnaht wieder geöffnet wird, oder dass die nachfolgen Produkte verschoben werden. Unmittelbar nach dem Faltvorgang und bevor der Schweißvorgang beginnt, wird der Bereich der Folie mit der Perforation über die beiden Messer 8 herausgeschnitten. Zu diesem Zeitpunkt wird die Folie weiter über die Ansaugdüse 9 angesaugt. Das unmittelbar nach dem Abdecken der Düse 9 durch die Folie entstehende Vakuum dient dazu, die Folie während des Schneidvorgangs zu halten.
Bei den Produkten handelt es sich um komprimierbare und zusammengepreßte Produkte, beispielsweise Papierhygieneprodukte. Selbst ohne das Zusammenfahren der Klemmbacken 12 steht die Folie unter einer gewissen Spannung, die durch das Zurückfedern der Produkte bewirkt wird. Durch das Entweichenlassen bzw. Absaugen der Luft soll erreicht werden, dass die Luft weder nach vorne noch nach hinten gedrückt wird, was in einem Fall zum Aufplatzen der vorherigen noch nicht abgekühlten Naht und im anderen Fall zum verschieben des Produkts führen könnte.

Da die Monofolie unter Spannung steht, wird die Folie von beiden Seiten her zunächst bis zur gegenseitigen Berührung gefaltet, was bei dem dargestellten Ausführungsbeispiel mit Hilfe der Klemmbacken 12 geschieht. Das Verschweißen ist ein getrennter Vorgang, der gleichzeitig oder geringfügig die Zeit verzögernd erfolgen kann.

## Patentansprüche

1. Verfahren zum Verschweißen von komprimierbaren und zusammengepressten Produkten (2) in Schlauchbeutel, bei dem
eine Folie längs gefaltet wird,
die Produkte (2) mit Abstand in dem Folienschlauch (1) angeordnet werden,
die Folie längs verschweißt wird, wobei die Folie unter Spannung steht **dadurch gekennzeichnet dass**
die Folie an den Stellen zwischen den Produkten (2) quer perforiert wird,
die Folie in den Bereichen zwischen den Produkten (2) quer zusammengefaltet wird, wobei
die Luft durch die Perforation ausströmt,
der Folienschlauch (1) quer verschweißt und zertrennt wird.

2. Verfahren nach Anspruch 1, bei dem die Folie in einem quer zur Längsrichtung verlaufenden Streifen perforiert wird.

3. Verfahren nach Anspruch 1 oder 2, bei dem die Luft während der Querfaltung abgesaugt wird.

4. Verfahren nach einem der vorhergehenden Ansprüche, bei dem die Perforation vor der Schlauchbildung durchgeführt wird, insbesondere durch Stanzen.

5. Verfahren nach einem der vorhergehenden Ansprüche, bei dem die Querverschweißung beidseits des die Perforation enthaltenden Bereichs durchgeführt wird.

6. Verfahren nach einem der vorhergehenden Ansprüche, bei dem der die Perforation enthaltende Bereich vor dem Zertrennen in Querrichtung entfernt wird.

7. Verfahren nach einem der vorhergehenden Ansprüche, bei dem die Quertrennung durch zwei parallele Schneideinrichtungen erfolgt, insbesondere beidseits des die Perforation enthaltenden Bereichs.

8. Verfahren nach einem der Ansprüche 3 bis 7, bei dem das Ansaugen während des Trennens aufrecht erhalten wird.

9. Verfahren nach einem der vorhergehenden Ansprüche, bei dem das Querzertrennen vor dem Querschweißen durchgeführt wird.

10. Vorrichtung zum Verschweißen von komprimierbaren und zusammengepressten Produkten (2) in Schlauchbeutel bei unter Spannung stehender Folie, mit
einer Einrichtung zum Längsfalten einer Flachfolie,
einer Einrichtung zum Längsschweissen der Folie, **gekennzeichnet durch**
eine Einrichtung zum Perforieren der Folien in einem quer zur Längsrichtung verlaufenden Bereich, sowie
ein Querschweißmodul (4 ), das
zwei Paare von Schweißbacken (6, 7) aufweist,
die einen mindestens der Breite eines Streifens mit der Perforation entsprechenden Abstand voneinander aufweisen.

11. Vorrichtung nach Anspruch 10, mit einer Trenneinrichtung zum Quertrennen des Folienschlauches.

12. Vorrichtung nach Anspruch 11, bei der die Trenneinrichtung zwei Messer (8) aufweist, die einen mindestens der Breite des Streifens mit der Perforation entsprechenden Abstand voneinander aufweisen.

13. Vorrichtung nach einem der Ansprüche 10 bis 12, mit einer Absaugeinrichtung, die im Bereich zwischen den beiden Paaren von Schweißbacken (6, 7) ansaugt.

## Claims

1. Method for welding compressible and compressed products (2) in tubular bags, wherein a film is longitudinal folded, the products (2) are placed in spaced manner in the film tube (1), the film is longitudinally welded and the said film is under tension, **characterized in that** the film is transversely perforated at the points between the products (2), the film is transversely folded together in areas between the products (2), the air flowing out through the perforation, the film tube (1) is transversely welded and cut.

2. Method according to claim 1, wherein the film is perforated in a strip at right angles to the longitudinal direction.

3. Method according to claim 1 or 2, wherein the air undergoes suction during cross-folding.

4. Method according to one of the preceding claims, wherein perforation takes place prior to tube formation and in particular by punching.

5. Method according to one of the preceding claims, wherein transverse welding takes place on either side of the perforation-containing area.

6. Method according to one of the preceding claims, wherein the perforation-containing area is removed in the transverse direction prior to cutting.

7. Method according to one of the preceding claims, wherein cross-cutting takes place by two parallel cutting devices and in particular on either side of the perforation-containing area.

8. Method according to one of the claims 3 to 7, wherein suction is maintained during separation or cutting.

9. Method according to one of the preceding claims, wherein cross-cutting is performed prior to transverse welding.

10. Apparatus for welding compressible and compressed products (2) in tubular bags with the film under tension with a device for the longitudinal folding of a flat film, a device for the longitudinal welding of the film, **characterized by** a device for perforating films in an area at right angles to the longitudinal direction, together with a transverse welding module (4) having two pairs of welding jaws (6, 7), which have a mutual spacing at least corresponding to the width of a strip with the perforation.

11. Apparatus according to claim 10, with a cutting device for the cross-cutting of the film tube.

12. Apparatus according to claim 11, wherein the cutting device has two knives (8), which have a mutual spacing at least corresponding to the width of the strip with the perforation.

13. Apparatus according to one of the claims 10 to 12, with a suction device having a suction action in the area between the two pairs of welding jaws (6, 7).

## Revendications

1. Procédé pour le soudage de produits (2) comprimables et compressés dans un sac tubulaire dans lequel
une feuille est pliée longitudinalement,
les produits (2) sont disposés à distance dans la feuille extrudée en gaine (1),
la feuille est soudée longitudinalement, la feuille étant sous tension, **caractérisé en ce que** la feuille est perforée transversalement aux endroits entre les produits (2),
**en ce que** la feuille est pliée transversalement dans les zones entre les produits (2), l'air s'échappant par la perforation,
**en ce que** la feuille extrudée en gaine (1) est soudée et est sectionnée transversalement.

2. Procédé selon la revendication, dans lequel la feuille est perforée dans une bande s'étendant transversalement au sens longitudinal.

3. Procédé selon la revendication 1 ou 2, dans lequel l'air est aspirée pendant le pliage transversal.

4. Procédé selon l'une des revendications précédentes, dans lequel la performation est effectuée avant la formation de la gaine, en particulier par estampage.

5. Procédé selon l'une des revendications précédentes, dans lequel le soudage transversal est effectué de part et d'autre de la zone contenant la perforation.

6. Procédé selon l'une des revendications précédentes, dans lequel la zone contenant la perforation est éliminée avant le sectionnement dans le sens transversal.

7. Procédé selon l'une des revendications précédentes, dans lequel le sectionnement transversal est effectué par deux dispositif de coupe parallèles, en particulier de part et d'autre de la zone contenant la perforation.

8. Procédé selon l'une des revendications 3 à 7, dans lequel l'aspiration est maintenue pendant le sectionnement.

9. Procédé selon l'une des revendications précédentes, dans lequel le sectionnement transversal est effectué avant le soudage transversal.

10. Dispositif pour le soudage de produits comprimables et comprimés (2) dans un sac tubulaire avec une feuille sous tension, comprenant
un dispositif pour le pliage longitudinal d'une feuille plate,
un dispositif pour le soudage longitudinal de la feuille **caractérisé par** un dispositif pour la perforation des feuilles dans une zone s'étendant transversalement au sens longitudinal, ainsi que
par un module de soudage transversal (4) qui présente deux paires de mâchoires de soudage (6, 7), qui présentent une distance entre elles correspondant au moins à la largeur d'une bande avec la perforation.

11. Dispositif selon la revendication 10, avec un dispositif de sectionnement pour la séparation transversale de la feuille extrudée en gaine.

12. Dispositif selon la revendication 11, dans lequel le dispositif de sectionnement présente deux lames (8) qui présentent une distance entre elles correspondant au moins à la largeur de la bande avec la perforation.

13. Dispositif selon l'une des revendications 10 à 12, comprenant un dispositif d'aspiration qui aspire dans la zone entre les deux paires de mâchoires de soudage (6, 7).
